# EUROPEAN PATENT APPLICATION

(11) **EP 1 643 746 A1**
(43) Date of publication of application: **05.04.2006**
(21) Application number: 05256081.0
(22) Date of filing: 29.09.2005
(51) Int. Cl.: H04M 3/533

(54) **Messaging system**

(30) Priority: 30.09.2004 GB 0421771
(71) Applicant: Avaya UK, Guildford, Surrey GU2 7YL (GB)
(72) Inventor: Didcock, Clifford Neil, Sammamish, Washington 98075 (US); Wilson, Michael Geoffrey Andrew, London E11 1JH (GB); Arnold, Paul, Bracknell Berkshire RG12 7FG (GB)
(74) Representative: Williams, David John

(57) **Abstract**

A method of addressing users in a messaging architecture comprising a plurality of voice messaging systems each associated with one or more users, the method comprising, at a selected messaging system: defining at least one user group; allocating users of the messaging architecture to a user group; and allocating an addressing rule to each user group, wherein a subscriber in the messaging architecture is addressed in dependence on the subscriber rule.

## Description

### BACKGROUND OF THE INVENTION:

### Field of the Invention:

The invention relates to distributed messaging systems, in which there is provided inter-system message networking.

### Description of the Related Art:

An example of a messaging system is a voice mail system. Voice mail systems have typically supported inter-system message networking for many years. This support of networking typically allows voice mail subscribers to send messages from their own voice mail system to subscribers on other voice mail systems.

The advent of global voice mail systems, with an enterprise-wide address scheme, makes networked message addressing complex. In this context an enterprise is considered to be, for example, a company messaging system. For global companies, the company messaging system is a global messaging system. Voice mail functionality is typically provided at multiple locations in multiple countries. To address messages to remote subscribers in such a distributed system requires lengthy digit strings to globally disambiguate the remote mailbox.

Originally networked voice mail systems were administered in a very time-consuming manner, with point-to-point connections administered for any pair of voice mail systems. For addressing purposes each point-to-point connection would be administered with a numeric address prefix.

Additional flexibility can be introduced if the voice messaging system can be used in conjunction with an enterprise-wide subscriber directory. This is traditionally available through hub-and-spoke voice networking products or with unified messaging products which use a corporate email directory as a repository for user objects. In such cases, an administrator may manage a single enterprise-wide directory. A voice mail subscriber may then be presented with a single name space from which to address messages to anyone in their enterprise. Uniqueness of address can only be achieved through long digit strings. The typical scheme used by multinational companies is the international phone number .i.e. each user is uniquely identified by their international phone number, including country code

By way of a summary, addressing in networked voice messaging systems has generally been limited to:
a) Providing local addresses for subscribers 'within the box', i.e. within the specific voice messaging system. This is generally a special case resolved and delivered in a private manner, and not a scenario with which the present invention is concerned in addressing.
b) Point-to-point connections created specifically by an administrator. This may be complex and time-consuming to manage. The configuration provides for point-to-point connectivity between individual voice mail systems. Messages are addressed to a configured prefix along with a host-specific identifier.
c) A single enterprise-wide numerical name space. Such a solution results in addresses being lengthy, typically of the form, for example, of 14081234567 or 442081234567, being the full subscriber telephone number including international dialing code. The problem for end users is that such long numbers are hard to remember and result in address-entry mistakes.

It is an aim of the present invention to provide an improved addressing arrangement suitable for use in messaging systems such as voice mail systems.

### SUMMARY OF THE INVENTION:

The invention preferably provides simple to administer mechanisms to support convenient and usable shorter-form addresses in conjunction with an enterprise-wide directory.

In one aspect the invention provides a method of addressing users in a messaging architecture comprising a plurality of voice messaging systems each associated with one or more users, the method comprising, at a selected messaging system: defining at least one user group; allocating users of the messaging architecture to a user group; and allocating an addressing rule to each user group, wherein a subscriber in the messaging architecture is addressed in dependence on the subscriber rule.

The step of defining at least one user group may comprise allocating users to user groups in dependence on the user location. The addressing rule may be location specific.

The step of addressing a user in the messaging architecture may comprise retrieving a user group identifier for a user from stored data.

The retrieved user group identifier may be used to retrieve a dialing rule from stored data.

The retrieved dialing rule may be used to retrieve one or more fields of a user address from stored data.

The one or more fields may be selectively retrieved in dependence on the group identifier.

The one or more fields may be retrieved and selectively masked in dependence on the group identifier.

The dialing rule may provide a rule for subscribers of any other messaging system for dialing the selected messaging system.

The invention also provides a method of addressing users in a messaging architecture comprising a plurality of voice messaging systems each associated with one or more users, the method comprising, at a selected messaging system: defining at least one user group; allocating all users of the messaging architecture to a user group; and allocating an addressing rule to each user group, wherein a user in the selected messaging system is addressed by any other user in accordance with the dialing rule allocated to the user group with which that other user belongs.

The dialing rule may provide a rule for subscribers of the selected messaging system for dialing subscribers of other messaging systems.

The invention also provides a method of addressing users in a messaging architecture comprising a plurality of voice messaging systems each associated with one or more users, the method comprising, at a selected messaging system: defining at least one user group; allocating at least the users of the messaging architecture external to the selected messaging system to a user group; and allocating an addressing rule to each user group, wherein a user in the selected messaging system addresses any other user in accordance with the dialing rule allocated to the user group with which that other user belongs..

The dialing rule may provide a rule for subscribers of any other messaging system for dialing the selected messaging system.

In a further aspect the invention provides a method of addressing users in a messaging architecture comprising a plurality of voice messaging systems each associated with one or more users, the method comprising, at a selected messaging system: defining at least one user group; allocating at least the users of the messaging architecture external to the selected messaging system to a user group; and allocating an addressing rule to each user group, wherein a used in the selected messaging system addresses users in another selected messaging system in accordance with the dialing rule allocated to the user group with which that user belongs.

### BRIEF DESCRIPTION OF THE FIGURES:

The invention is described herein with regard to particular examples with reference to the accompanying figures, in which:
Figure 1 illustrates an exemplary distributed voice mail system architecture, in which a plurality of voice mail systems are provided;
Figure 2 illustrates the arrangement of a directory store, and access to data therein, in accordance with a first embodiment of the invention;
Figure 3 illustrates a method of operation in a distributed voice mail system adapted to include the arrangement of Figure 2;
Figure 4 illustrates the arrangement of a directory store, and access to data therein, in accordance with a second and third embodiment of the invention; and
Figure 5 illustrates a method of operation in a distributed voice mail system adapted to include the arrangement of Figure 4.

### DESCRIPTION OF THE PREFERRED EMBODIMENTS:

The invention is described herein by way of example with reference to particular preferred embodiments. The invention is not, however, limited to the specifics of such embodiments. In particular the invention is described in the context of a distributed voice messaging architecture, such architecture comprising a plurality of distributed voice messaging systems, users/subscribers of the respective voice messaging systems being arranged to address each other.

In summary the invention may be considered to provide for the configuration of a convenient addressing scheme or schemes for use in conjunction with an architecture-wide directory. The architecture-wide directory may be provided centrally, such as in a single location accessible by all voice mail systems. Alternatively the architecture-wide directory may be copied and provided in a distributed manner at each or some voice mail systems. When provided in a distributed manner, only a necessary portion of the architecture-wide directory may be provided, necessary for the operation of the invention and embodiments thereof at the voice messaging system. In a preferred embodiment the messaging system architecture is an enterprise messaging system.

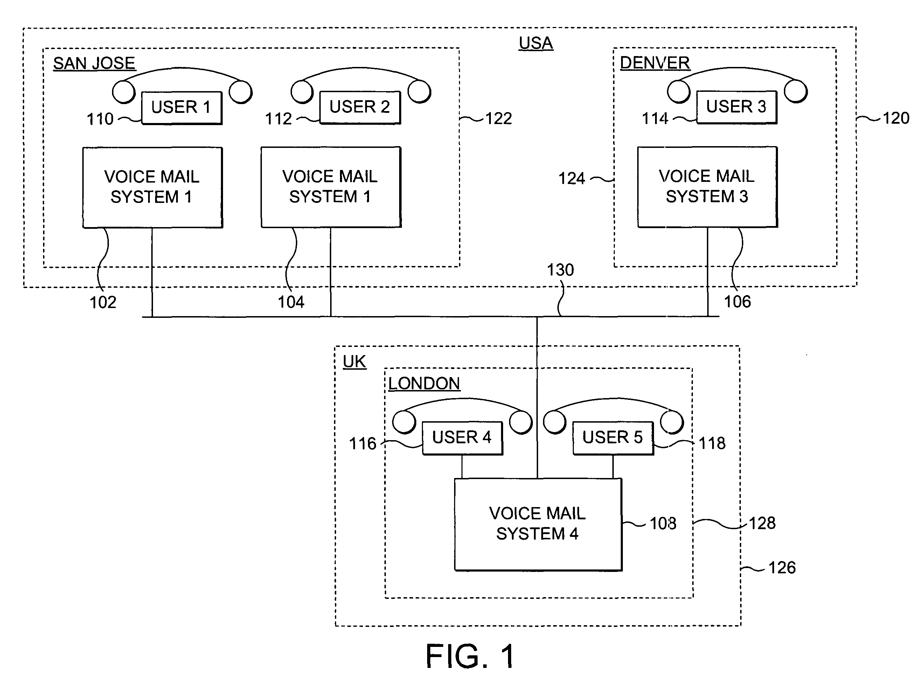

With reference to Figure 1 there is illustrated an exemplary messaging architecture within the context of which embodiments of the invention are described. The exemplary messaging architecture includes a plurality of voice mail systems: a first voice mail system designated by reference numeral 102; a second voice mail system designated by reference numeral 104; a third voice mail system designated by reference numeral 106; and a fourth voice mail system designated by reference numeral 108. Each voice mail system is associated with at least one user/ subscriber, which in turn is associated with at least one terminal connected in the voice mail system. The first voice mail system 102 is associated with a terminal 110; the second voice mail system 104 is associated with a terminal 112; the third voice mail system 106 is associated with a terminal 114; the fourth voice mail system 104 is associated with a terminal 116 and a terminal 118. Each of the terminals 110, 112, 114, 116, 118 in turn is associated with a particular user or subscriber.

As is further illustrated in Figure 1, the voice mail systems 1, 2 and 3, denoted by reference numerals 102, 104 and 106, are each located in the USA, as denoted by the dashed-line box 120 of Figure 1. Within the USA, the first voice mail system 102 and the second voice mail system 104 are each located within San Jose, as denoted by the dashed-line box 122. The third voice mail system 106 is located within Denver, as denoted by the dashed line box 124. The fourth voice mail system 108, as denoted by the dashed line box 126, is located within the UK. More specifically, as denoted by the dashed line box 128, the fourth voice mail system 108 is located in London.

In Figure 1 each of the voice mail systems 102, 104, 106, 108 may be connected to a bus 130, which provides for interconnection there between. The voice mail systems may be interconnected by alternative means, such as any means known in the art. The invention and its embodiments are not dependent on any particular interconnection of the voice mail systems.

It should be noted that Figure 1 is intended to present an example of a voice mail system as known in the art. The specific implementation and operation of such a system is known to one skilled in the art. The invention and its embodiments is not dependent on the type and configuration of the voice mail systems: any voice mail system may be used. There is no requirement for the operation of the invention and its embodiments that the voice mail systems are the same systems, or configured in a particular manner. In practice however the voice mail architecture may require the voice mail systems to have similar structure and configuration. Of course in a practical implementation each voice mail system is associated with a large number of users/subscribers, and not the one or two users/subscribers shown in Figure 1 for the purposes of simplifying an explanation of the invention.

For the purpose of the described embodiments below, the user terminals 110, 112, 114, 116, 118 are each referred to hereinafter as the first to fifth subscribers/users/terminals, respectively, of the voice mail architecture.

Primarily the invention provides for two alternative schemes. The first scheme, which is described herein below in the context of a first embodiment, uses an enterprise directory to publish a set of rules that may be used to simplify the task of addressing users of one voice mail system from other voice mail systems. The rules are determined and controlled by an administrator of the one voice mail system. This provides an order of magnitude simpler administration compared to currently known systems.

The second scheme, which is described herein below in the context of a second and third embodiment, allows an administrator of a voice mail system to create a set of rules to simplify the addressing, for users/subscriber of its own voice mail system, of users/subscriber in other voice mail systems.

Both schemes leverage the global consistency of an enterprise directory to define simplified numeric addressing mechanisms.

A first embodiment of the invention is now described. In the first embodiment of the invention, there is provided a form of an addressing scheme which allows an administrator to define, on behalf of the voice mail system being configured, a set of rules to shorten and simplify message addressing from remote users, i.e. users of other voice mail systems, to users of that voice mail system.

In accordance with the first embodiment, the directory of a given system publishes or otherwise makes available a set of rules, which set of rules can be implemented by users of other systems in addressing users of the given system.

There are well understood shortened forms of dialing used within telephone networks. This understanding may only be valid within, at best, national scope. For example within a location only a users/subscribers extension may be necessary to address the user. Typically within a local area only a local telephone number may be necessary to address the user. The size of the local number may vary according to country of location. In the UK, for example, the local telephone number is a seven or eight digit telephone number. The local telephone number may include an extension number as part thereof. Within a country a local area code may be needed in combination with the local telephone number. A further three digit number may therefore be used. Outside of a country, international access codes may be needed in addition to the local area code and the telephone number, to provide worldwide uniqueness.

An example of the composition of a telephone number is as follows. A telephone associated with a voice mail system may be addressed by a three digit extension number, for example 123, from another telephone within the system. In addition the telephone may be addressed by an eight digit local telephone number, from another telephone within the local area. In the example the telephone is assumed to be located in London in the United Kingdom. The eight digit local telephone number may be 8456 7123. In this preferred embodiment, the extension number is included as the final digits of the local telephone number. The telephone may be addressed by a local area code and the local telephone number from elsewhere in the UK. The local area code is 020, the telephone being addressed by the number 02084567123 from outside outer London but within the UK. From outside the UK, the telephone may be addressed by an international access code, the local area code, and the local telephone number. The telephone may thus be addressed by the number 442084567123. Note that in the international scenario, the local area codes may be modified, in this example by dropping the first 0 of the local area code.

For the purposes of describing the embodiments of the invention, the five users/subscribers 110 to 118 of Figure 1 have unique addresses, specifically in the example telephone numbers, as follows:

First user 110:
- Extension No:: 4567
- Telephone No:: 1234567
- Local Area Code:: 408
- Country Code:: 1

### Second user 112:

- Extension No:: 4321
- Telephone No:: 7654321
- Local Area Code:: 408
- Country Code:: 1

### Third user 114:

- Extension No:: 4567
- Telephone No:: 1234567
- Local Area Code:: 303
- Country Code:: 1

### Fourth user 116:

- Extension No:: 1000
- Telephone No:: 87771000
- Local Area Code:: 020
- Country Code:: 44

### Fifth user 118:

- Extension No:: 2000
- Telephone No:: 87772000
- Local Area Code:: 020
- Country Code:: 44

As can be seen the first and third users have the same extension numbers on different systems, and therefore to guarantee a unique address for users/subscribers requires the full user/subscriber address, including the country code. As has been set out in the background to the invention, the problem with such a rigid addressing system is that to uniquely address a user or subscriber, a long digit sequence is thus required, including the international code, area code, and telephone number.

In accordance with the first embodiment of the invention, within a network of cooperating voice mail systems, each with access to a common enterprise-wide directory, a voice mail system administrator may create a set of addressing rules. These rules, when published in the directory, can be made available to all cooperating voice mail systems.

In this first embodiment the system administrator may create a set of rules that define, in terms of user-information already present in the enterprise directory, minimal digit addressing for all categories of users. This example is based on the number of significant digits of the full telephone number that will be required. In other applications the addressing may not be based on a telephone number, but on some other address comprising a plurality of parts or fields. Users may be defined that can use just the extension number. Other sets of users may be defined, say by their city, that can use addressing based on a higher number of digits, and users within the country of the administered voice mail system may use the national dialing digits. Further users, being users outside the country in which the voice mail system is deployed, may use the international dialing code in addition to the local area code and the local telephone number.

Thus, for any given voice mail system, the administrator thereof defines a set of user groups, and a dialing rule for each user group. Preferably, the user groups correspond to geographical areas or locations of the users/subscribers, as this allows an efficient mechanism for grouping required fields of a telephone number, for example. This also leads to the user groups in effect being voice mail system groups, with users/subscribers associated with a given voice mail system being in the same user group.

A user seeking to call a telephone (or user/subscriber) connected in the given voice mail system, on accessing the enterprise directory, is provided with dialing information in accordance with said rules defined by the administrator of the voice mail system. The user groups are preferably defined by the number needing to be dialed by any user/subscriber to access a telephone in the given network.

The rules compiled by the administrator of the given network are preferably published. They may be provided within a global directory. The rules for use of a given voice mail system may be provided locally within that voice mail system. It should be noted that the rules associated with users of a voice mail system for telephoning users of the given voice mail system will be shared. Thus a global rule may be provided to any voice mail system for all users of that voice mail system, said global rule being set by the given voice mail system. The rules may be published and accessed centrally in an enterprise wide directory. The rules may be provided to each other voice mail system within the voice mail architecture, and stored locally within such voice mail systems.

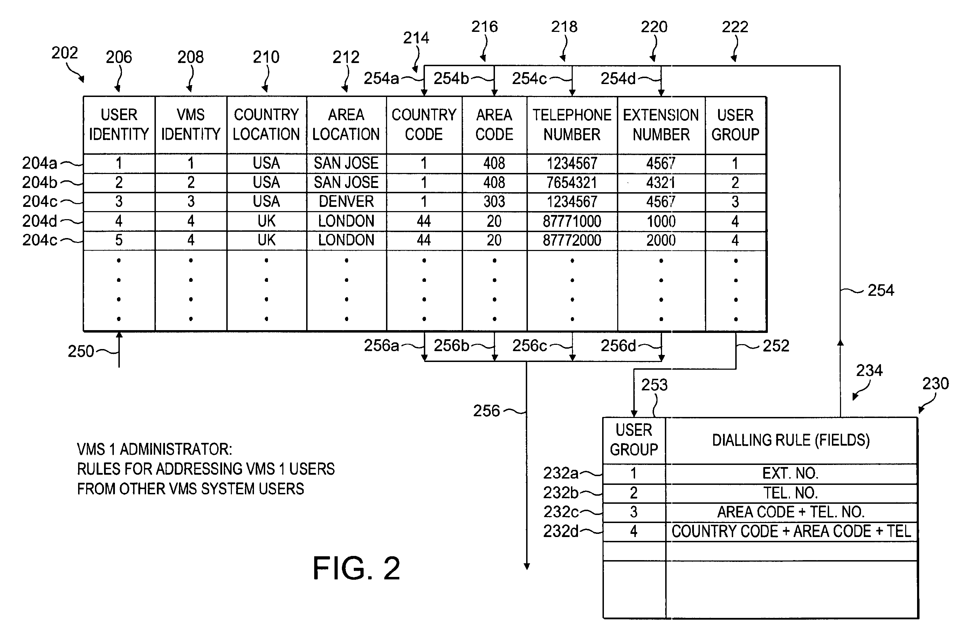

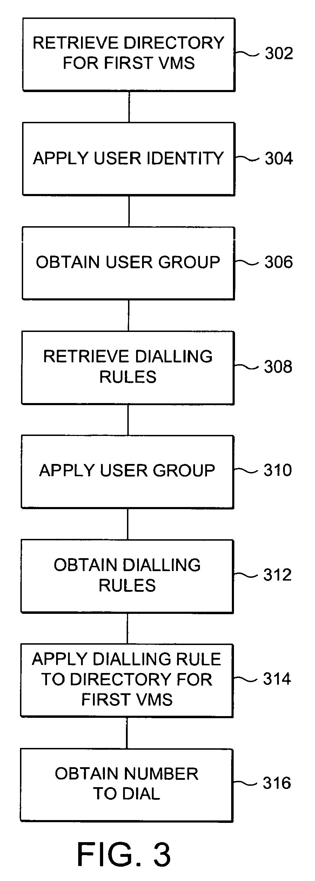

A preferred implementation of the first embodiment is now described with reference to Figures 2 and 3.

In the described example, there is discussed a scenario where an administrator of the first voice mail system 102 establishes dialing rules, in accordance with determined user groups, for use by all users/subscribers in the voice messaging architecture when making calls to users/subscribers of the voice mail system 102.

It should be noted that reference to an administrator may be understood to be reference to a controller or processor under the control of which a voice mail system operates.

With reference to Figure 2, there is illustrated at least a portion 202 of an enterprise wide directory. The enterprise wide directory includes a row 204 for each user of the voice mail architecture, and thus with reference to the preferred (and simplified) example of Figure 1, has a row 204a to 204e for each of users 1 to 5 respectively. There is a column associated with various fields for each user. In practice, each user entry may be associated with more or less fields than is illustrated in Figure 2. In Figure 2, there is illustrated a plurality of columns each associated with a field; a value or entry for each field being provided for each user. Thus, for each user in each row, there is provided in addition to a user identity in column 206, an entry for the following fields: the voice messaging system (VMS) identity of the user in a column 208; the country location of the user in a column 210; the area location of the user in a column 212; the country code associated with the user address in a column 214; the area code associated with the user address in a column 216; the telephone number associated with the user address in a column 218; the extension number associated with the user address in a column 220; and a user group for the user in a column 222.

It should be noted that the enterprise-wide directory in practice includes a larger number of entries for each user identity than is shown in Figure 1. The entries shown in Figure 1 are for illustrative purposes, and not all entries are necessary for implementing the invention. The necessary entries will become apparent from the following description.

The enterprise-wide directory may be provided in a memory in a central location accessible to all voice mail systems, in a memory at one voice mail system accessible to all voice mail systems, at multiple locations accessible all or in part as necessary by various voice mail systems. The provision of such an enterprise-wide directory in various possible configurations is known in the art.

With further reference to Figure 2, there is also illustrated at least a portion of a dialing rule store 230 in accordance with the first embodiment of the invention. The dialing rule store 230 includes a row entry for each user group. In the described example there are four user groups, and therefore four row entries 232a to 232d. There is further a column 234 providing a dialing rule for each user group.

In this embodiment, the administrator of the first voice mail system defines four user groups, associated with four possible locations from which another user/subscriber may address a user/subscriber of the first voice mail system. A first user group is for users associated with the first voice mail systems itself, a second user group is for users in the same local area as the first voice mail server, but not associated therewith, a third user group is for users in the same country as the first voice mail system, but not the local area, and the fourth user group is for users in a different country to the first user group. This is an exemplary, but preferable, generation of user groups. In alternative arrangements other criteria for grouping users may be applied. The groups to which various users are allocated by the administrator are included in column 222 of the directory 202.

It should be noted that in this example where the users are grouped in dependence on location, the rules for each user group are similarly based on location. Thus for the first user group the rule is to use the user extension number, for the second user group the rule is to use the user telephone number, for the third user group the rule is to use the users local area code and telephone number, and for the fourth user group the rule is to use the users country code, local area code and telephone number.

The operation of the first embodiment is now described by way of reference to the directory and rule stores of Figure 2, and the access to data stored therein, and the method flow diagram of Figure 3.

It is assumed that the administrator of the first voice mail system 102 has established or configured user groups and an appropriate set of dialing rules for such user groups to address users/subscribers of the first voice mail system 102. These rules for first voice mail system 102 are provided in dialing rule store 230.

In operation, a user/subscriber of a VMS system wanting to address a user/subscriber of the first VMS 110 in the first instance retrieves the directory for the first VMS system 102, as denoted by step 302. This may involve accessing a local VMS memory, or accessing an enterprise wide memory. Thus in an initial step 302 the VMS identity of the destination user/subscriber may be used to retrieve the appropriate directory.

Once the directory is accessed, as denoted by input 250 to the directory 202 in Figure 2, the user identity of the user/subscriber which is addressing a user/subscriber in the first voice mail system, i.e. the originating user, is applied to the user identity column 206 of the directory, as denoted by step 304. As a result the corresponding user group for that user/subscriber determine by the administrator of the first voice mail system is obtained from the user group column 222, as denoted by step 306, and output from the directory as denoted by output 252.

Once the user group is obtained on output 252, the dialing rule directory for the first VMS 102 is retrieved, as denoted by step 308. The obtained user group identity on output 252 is then applied to the user group column 252 of the dialing rule directory 230, as denoted by step 310. As a result the corresponding dialing rule for the user group is obtained from the dialing rule column 234, as denoted by step 312, and provided from the directory on output 254 from the column 234.

The dialing rule may, in a preferred arrangement, identify the fields which are to be used to address the required user/subscriber. The dialing rule may therefore be a list of one or more fields of the directory 202. The fields of the directory which may be used to address a user/subscriber of the first VMS 102 are included in columns 214, 216, 218, 220. Thus for each use group one or more of these columns is defined.

Once the dialing rule is obtained, the dialing rule is applied to the columns 214, 216, 218, 220, as denoted by outputs 254a, 254b, 254c, 254d, and step 314. The dialing rule may be applied by simply enabling the columns containing the required fields as identified in column 234 of the user group directory 230. Thus the output 254 may comprise a plurality of signals corresponding to the plurality of available fields.

On applying the dialing rules on line(s) 254 to the directory 202, the user identity of the user/subscriber to be addressed is preferably still applied as denoted by input 250. On application of one or more enablement signals on inputs 254a to 254d, the contents of the fields for the enabled columns, for the applied user identity in column 206, are output on one or more of the output lines 256a to 256d of the respective columns 214 to 220.

The contents of the fields on lines 256a to 256d in combination, on line 256, provide the dialing number to be used for addressing the user/subscriber in the first voice mail system 102. The addressing to be used, specifically the number to be dialed, is thus obtained on output 256, as denoted by step 316.

This output may be displayed, for example, on a display screen of a terminal being used by a call originator accessing directory information.

Whilst in an embodiment the dialing rule fields of column 234 may provide enablement signals to the columns of the directory 202 containing those fields, in an alternative the dialing rule may be a mask to be applied to the output on lines 256a to 256d. Thus the fields from all of the columns 214 to 220 may be output on outputs 256a to 256d, responsive to the input 250, and a mask applied by the appropriate dialing rule in column 234 applied to the outputs 256a to 256d, such that only the required fields are presented as a dialing number on line 256.

In the example of Figure 2, the administrator of the first voice mail system 102 defines four user groups. A first user group is those users/subscribers that are connected in the first voice mail system 102, and which can dial any other user/subscriber in that voice mail system using only the user's extension number. For this user group, as shown in row 232a of the dialing rule directory 230, only the field containing the extension number in column 220 is required. A second user group is those users/subscribers that are connected in a different voice mail system in the same geographical area, such as the second voice mail system 104. For such users/subscribers, as shown in row 232b of the dialing rule directory 230, only the telephone number (excluding area code) is required. A third user group is those users/subscribers that are connected in a different voice mail system in a different geographical area within the same country, such as the third voice mail system 106. For such users/subscribers, as shown in row 232c of the dialing rule directory 230, the telephone number and the area code are required. A fourth user group is those users/subscribers that are connected in a different voice mail system in a different geographical area in a different country, such as the fourth voice mail system 108. For such users/subscribers, as shown in row 232d of the dialing rule directory 230, the telephone number, the area code and the country code are required.

In one embodiment, as shown in Figure 2, the telephone number of a user/subscriber is provided in one column, column 218, and the extension number of the user/subscriber is provided in another column, column 220. In some applications, the extension number may be part of the telephone number. In such cases, the column 220 may provide the extension number, and the column 218 may provided the other part of the telephone number not being the extension number. In such case the columns 218 and 220 in combination provide the telephone number.

It can be seen that in dependence on the selection of the contents of the columns 214 to 220 for a user selected in column 206, the telephone number to be dialed can be provided. The selection of the ones of the columns or fields for any user is in dependence on a rule allocated to that user. The rules are preferably, as discussed hereinabove, applied to user groups, each user being allocated to a user group. The unique identifier, such as a telephone number, of any user/subscriber consists of a plurality of parts or fields, and the rules for each user group determine the ones of such fields to be used in addressing the user/subscribers of that group.

Thus, there in accordance with a first embodiment of the invention there is preferably provided a method in a voice mail architecture comprising a plurality of voice mail systems, the method comprising, in one voice mail system, of defining at least one user group for users of other voice mails systems, each user of another voice mail system being allocated to a user group, each group being associated with a dialing rule, the dialing rule being a rule for dialing a user of the said voice mail system from any other voice mail system.

In a second and a third embodiment of the invention, there are provided two forms of addressing schemes which allow an administrator to define, on behalf of the voice mail system being configured, a set of rules to shorten and simplify message addressing from users of that voice mail system to remote users, i.e. users of other voice email systems.

The second embodiment of the invention is now described.

In known voice mail systems, an enterprise-wide numeric address is stored in each subscriber's enterprise directory entry. This may typically most often be directly related to the users telephone number. Typically it is the same as the users telephone number. The following examples of numeric addresses can be considered in combination with Figure 1. A first user 110 of a first voice mail system 102 in San Jose, California, USA may have a numeric address of the form 14081234567. A second user 112 of a second voice mail system 104 also in San Jose, California, USA may have a numeric address of the form 14087654321. A third user 114 of a third voice mail system 106 in Denver, Colorado, USA may have a numeric address of the form 13031234567. A fourth user 116 of a fourth voice mail system 108 in London, United Kingdom may have a numeric address of the form 442087771000. A fifth user 118 of the fourth voice mail system 108 in London, United Kingdom may have a numeric address of the form 442087772000. In current voice mail systems, using a single name space, the first user would be expected to use the digit strings shown to address messages to any one of the second to fifth users. Thus in addressing any one of the users, the full numeric address of that user is used.

In the second embodiment of the invention, an administrator of a voice mail system is enabled to define addressing rules in conjunction with the administrators view of the global directory. The intention of the addressing rules is to allow minimal address lengths for each form of address. The rules may be specified in terms of other directory fields, or the required number of digits for example. Where the rule is specified based on number of digits, as an example the number of digits may be dependent upon the user's location. A maximum of ten digits may be required for all subscribers within the USA (or Canada). A maximum of seven digits may be required for all subscribers within San Jose.

A simple set of rules, defined in terms of the data conventionally stored for each user by a particular enterprise, allows addressing within a voice network to be simplified, preferably on a regional basis.

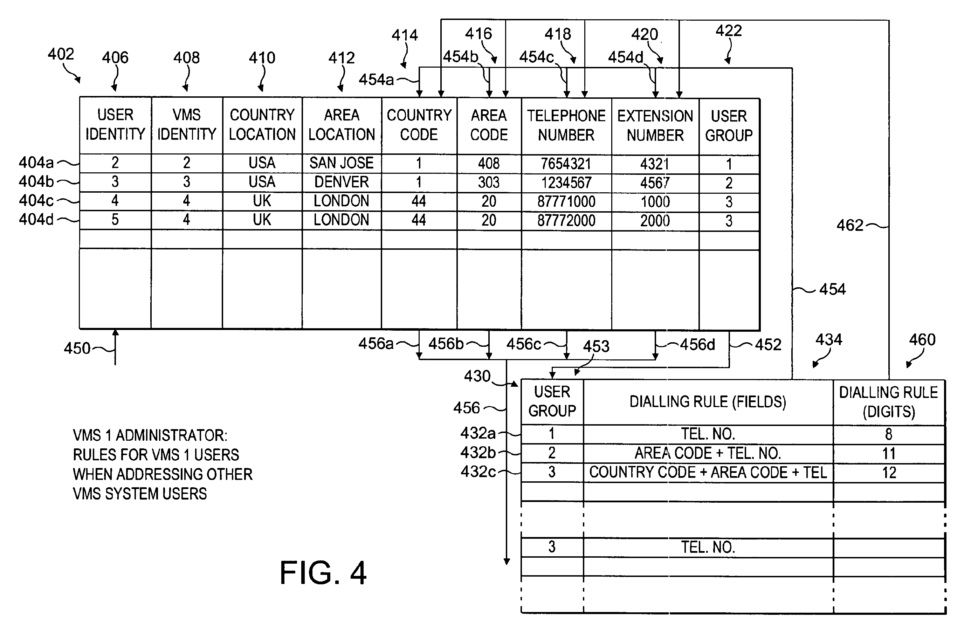

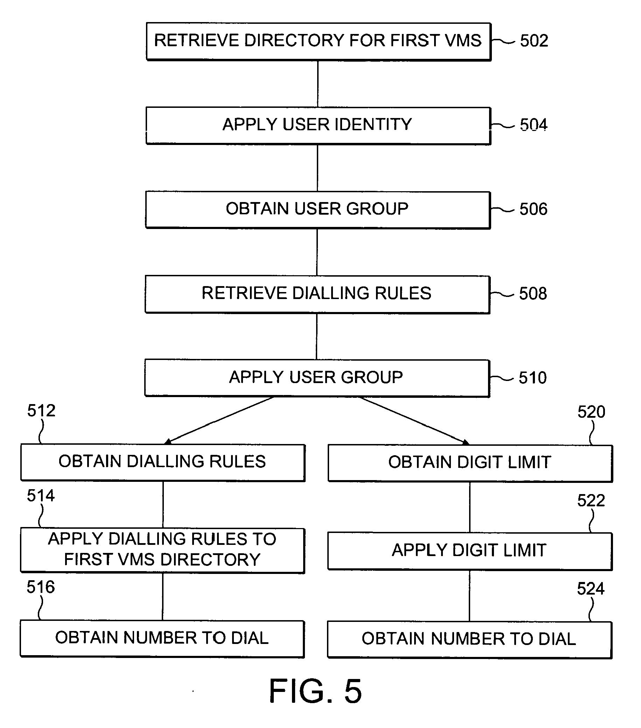

A preferred implementation of the first embodiment is now described with reference to Figures 4 and 5.

In the described example, there is discussed a scenario where an administrator of the first voice mail system 102 establishes dialing rules, in accordance with determined user groups, for use by all users/subscribers in the first voice mail system when making calls to other users in the voice mail architecture.

With reference to Figure 4, there is illustrated at least a portion 302 of an enterprise wide directory. The enterprise wide directory includes a row 304 for each user of the voice mail architecture not connected in the first voice mail system 110, and thus with reference to the preferred (and simplified) example of Figure 1, has a row 404a to 404d for each of users 2 to 5 respectively. There is a column associated with various fields for each user. In practice, each user entry may be associated with more or less fields than is illustrated in Figure 3. In Figure 3, there is illustrated a plurality of columns each associated with a field; a value or entry for each field being provided for each user. Thus, for each user in each row, there is provided in addition to a user identity in column 406, an entry for the following fields: the voice messaging system (VMS) identity of the user in a column 408; the country location of the user in a column 410; the area location of the user in a column 412; the country code associated with the user address in a column 414; the area code associated with the user address in a column 416; the telephone number associated with the user address in a column 418; the extension number associated with the user address in a column 420; and a user group for the user in a column 422.

It should be noted that the enterprise-wide directory in practice includes a larger number of entries for each user identity than is shown in Figure 4. The entries shown in Figure 4 are for illustrative purposes, and not all entries are necessary for implementing the invention. The necessary entries will become apparent from the following description. It should also be noted that the directory will include entries for the users of the first voice mail system 102 itself, but these are not shown in Figure 4 as they are not relevant to this embodiment of the invention.

With further reference to Figure 4, there is also illustrated at least a portion of a dialing rule store 430 in accordance with the second embodiment of the invention. The dialing rule store 430 includes a row entry for each user group. In the described example there are three user groups, and therefore three row entries 432a to 432c. There is further a column 434 providing a dialing rule for each user group.

In this embodiment, the administrator of the first voice mail system defines three user groups, associated with three possible locations at which another user/subscriber may address a user/subscriber external to the first voice mail system. A first user group is for users in the same local area as the first voice mail system, but associated with a different voice mail system, such as the second voice mail system 104, a second user group is for users in the same country as the first voice mail system, but not the local area, such as users associated with the third voice mail system 106, and the third user group is for users in a different country to the first voice mail system, such as users associated with the voice mail systems 116 and 118. This is an exemplary, but preferable, generation of user groups. In alternative arrangements other criteria for grouping users may be applied. The groups to which various users are allocated by the administrator are included in column 422 of the directory 402.

It should be noted that in this example the users external to the first voice mail system are grouped in dependence on location, and the rules for each user group are similarly based on location. Thus for the first user group the rule is to use the user telephone number, for the second user group the rule is to use the users local area code and telephone number, and for the third user group the rule is to use the users country code, local area code and telephone number.

In this second embodiment, there is also proposed an alternative dialing rule, as listed in column 460 of the rule store 430. In the alternative dialing rule, as will become apparent in the following discussion, the outputs of the fields containing the addressing information of a user are limited, for example by masking, to data of a certain length, e.g. a telephone number having a maximum number of digits. If there are multiple possible fields, this can be implemented by ordering the fields in lest significant to highest significant order, and outputting the digits starting from the highest significant filed, and ceasing the output when the digit limit as dictated by the dialing rule in column 460 is reached.

The operation of the second embodiment is now described by way of reference to the directory and rule stores of Figure 4, and the access to data stored therein, and the method flow diagram of Figure 5.

It is assumed that the administrator of the first voice mail system 102 has established or configured user groups and an appropriate set of dialing rules for all users/subscribers external to the first voice mail system, which users/subscribers of the first voice mail system may address. These rules for first voice mail system 102 are provided in dialing rule store 430.

In operation, a user/subscriber of the first VMS 102 wanting to address a user/subscriber of another VMS in the first instance retrieves the directory 402, as denoted by step 502, including the directory information for all users/subscribers external to the first voice mail system. This may involve accessing a local VMS memory, or accessing an enterprise wide memory. Thus in an initial step 502 the VMS identity of the originating user/subscriber may be used to retrieve the appropriate directory information, which excludes the information for that VMS itself.

Once the directory is accessed, as denoted by input 450 to the directory 402 in Figure 4, the user identity of the user/subscriber which is to be addressed external to the first voice mail system, i.e. the destination user, is applied to the user identity column 406 of the directory, as denoted by step 504. As a result the corresponding user group for that user/subscriber determined by the administrator of the first voice mail system is obtained from the user group column 422, as denoted by step 506, and output from the directory as denoted by output 452.

Once the user group is obtained on output 452, the dialing rule directory for the destination user is retrieved, as denoted by step 508. The obtained user group identity on output 452 is then applied to the user group column 453 of the dialing rule directory 430, as denoted by step 510.

In a first alternative for the second embodiment, as a result the corresponding dialing rule for the user group is obtained from the dialing rule column 434, as denoted by step 512, and provided from the directory on output 454 from the column 434.

This dialing rule may, in a preferred arrangement, identify the fields which are to be used to address the destination user/subscriber. The dialing rule may therefore be a list of one or more fields of the directory 402. The fields of the directory which may be used to address a user/subscriber are included in columns 414, 416, 418, 420. Thus for each user group one or more of these columns is defined.

Once the dialing rule is obtained, the dialing rule is applied to the columns 414, 416, 418, 420, as denoted by outputs 454a, 454b, 454c, 254d, and step 514. The dialing rule may be applied by simply enabling the columns containing the required fields as identified in column 434 of the user group directory 430. Thus the output 454 may comprise a plurality of signals corresponding to the plurality of available fields.

On applying the dialing rules on line(s) 454 to the directory 402, the user identity of the user/subscriber to be addressed is preferably still applied as denoted by input 450. On application of one or more enablement signals on inputs 454a to 454d, the contents of the fields for the enabled columns, for the applied user identity in column 406, are output on one or more of the output lines 456a to 456d of the respective columns 414 to 420.

The contents of the fields on lines 456a to 456d in combination, on line 456, provide the dialing number to be used for addressing the user/subscriber in the first voice mail system 110. The addressing to be used, specifically the number to be dialed, is thus obtained on output 456, as denoted by step 516.

In a second alternative for the second embodiment, as a result of obtaining the user group identity on output 452 and applying such to the user group column 453 of the dialing rule directory 430, as denoted by step 510, a corresponding dialing rule for the user group is obtained from the dialing rule column 460, as denoted by step 520, and provided from the directory on output 462 from the column 460.

This dialing rule may, in a preferred arrangement, identify the maximum number of digits which are to be used to address the destination user/subscriber. The dialing rule may therefore be a number.

Once the dialing rule is obtained from column 460, the dialing rule is applied to the columns 414, 416, 418, 420, as denoted by outputs 462a, 462b, 462c, 462d, and step 522.

On applying the dialing rules on line(s) 462 to the directory 402, the user identity of the user/subscriber to be addressed is preferably still applied as denoted by input 450. On application of one or more enablement signals on inputs 454a to 454d, the contents of the fields for the enabled columns, for the applied user identity in column 406, are output on one or more of the output lines 456a to 456d of the respective columns 414 to 420. The dialing rule may be applied by simply enabling all the columns containing the required fields as of the user group directory 430, and only outputting on lines 456a to 456d an appropriate number of digits corresponding the maximum allowable. As a result there may be an output on one or more of the lines 456a to 456d. Thus the output 454 may comprise a plurality of signals corresponding to the plurality of available fields.

The contents of the fields on lines 456a to 456d in combination, on line 456, provide the dialing number to be used for addressing the user/subscriber in the first voice mail system 110. The addressing to be used, specifically the number to be dialed, is thus obtained on output 456, as denoted by step 524.

Whilst in an embodiment the dialing rule fields of column 434 may provide enablement signals to the columns of the directory 402 containing those fields, in an alternative the dialing rule may be a mask to be applied to the output on lines 456a to 456d. Thus the fields from all of the columns 414 to 420 may be output on outputs 456a to 456d, responsive to the input 450, and a mask applied by the appropriate dialing rule in column 434 applied to the outputs 456a to 456d, such that only the required fields are presented as a dialing number on line 456.

The dialing rule fields of column 460 may be preferably applied by a mask at the outputs 456a to 456d, applied to the outputted numbers. In order of significance, which is predetermined, the appropriate number of bits is then masked.

It can be seen that in dependence on the selection of the contents of the columns 414 to 420 for a user selected in column 406, the telephone number to be dialed can be provided. The selection of the ones of the columns or fields for any user is in dependence on a rule allocated to that user. The rules are preferably, as discussed hereinabove, applied to user groups, each user being allocated to a user group. The unique identifier, such as a telephone number, of any user/subscriber consists of a plurality of parts or fields, and the rules for each user group determine the ones of such fields to be used in addressing the user/subscribers of that group.

The third embodiment of the invention is now described.

For many enterprises, groups requiring close and/or regular communication are not necessarily regionally organized. For instance the San Jose organization supported by the first voice mail system in the example of Figure 1 may deal regularly with the London office supported by the fourth voice mal system. In accordance with the second embodiment described above, this will result in the full, long form of the address of each subscriber needing to b provided. In such cases, a 12 digit address being given may be extremely unsatisfactory.

For this form of address, therefore, the third embodiment of the invention proposes an addressing rule relative to, and only valid in, San Jose for example. This rule may apply to one or all of the voice mail systems in San Jose. The semantics of this rule may be that for any subscriber with an office address of, or containing the strings, "London, UK", an address consisting of a specific prefix, e.g. 777, followed by the last 4 digits of the phone number is valid. This infers that either the prefix is known to come from a range that does not clash with normal phone numbers, or any number of the form 777nnnn is assumed to be a London number and hence overrides other numbers of this type.

The operation of the third embodiment is now described by way of further reference to the directory and rule stores of Figure 4, and the access to data stored therein.

Referring to Figure 4, it can be seen that there is provided a further row 433 defining for the third user group, which corresponds to the users in London, a dialing rule in column 434 which lists only the telephone number of the user, without the area code or the country code as is provided in row 432c.

Thus a user in San Jose may be provided with only the local number when seeking a number of a user in London. The voice mail system can uniquely identify this number, and resolves it internally to dial the full number including country code and local area code.

In the following, there is presented an example representation of addressing rules in a directory having an X.500 format, which format is known in the art. The following gives an example of how addressing rules, according to the different schemes discussed above, may be published using an X.500 type directory.

Rules by which objects may publish their address could be stored on objects distributed throughout an organizations X.500 directory with a well defined `objectClass' named, for example, "numericAddressingRules". An object of class 'numericAddressingRules' may define one or more rules. There may be two types of rule:
- Global: Defines a numbering scheme by which the leaf objects in the tree below them can be addressed.
- Alias: Defines a numbering scheme valid in the scope at which it is defined by which the leaf nodes in the identified sub-tree can be addressed.

The following BNF describes a syntax for rules:
- <rule>: ::= <global_Rule>|<alias_Rule>
- <global_rule>: ::= <#digits_to_match><restriction>
- <alias_rule>: ::=<prefix>,<#digits_to_match>,<scope> |
<prefix>, <#digits _to_match>,<scope>,<restriction>
- <prefix>: ::= NIL |<number>
- <#digits_to_match>: ::= <number>
- <restriction>: ::= NIL |<LDAP/SQL restriction to filter objects>
- <scope>: ::= <X.500 distinguished name>

An example of publishing simplified addressing rules throughout an organization is shown below. This may be represented as a global rule. This specific rule is intended to allow any user based in a particular office (known as an *addressing context)* to address other people within that office with a four digit address.
Scope: c=Uk, region=Greater London, city=Uxbridge, office=Stockley Park
Rule: 4,(objectClass="organizationalPerson")

To resolve a four digit address NNNN using this rule it is necessary to perform a sub-tree search within the scope at which the rule is defined for objects whose 'telephoneNumber' attribute match the addressed digits using a right to left partial match. This yields a search of the form:
Search Scope: c=UK, region=Greater London, city=Uxbridge, office=Stockley Park
Filter: &(telephoneNumber="*NNNN")(objectClass="organizationalPerson")

Similarly shortest unique addressing can be implemented by defining a global rule at a higher scope within the directory organization.

An example of simplified point to point addressing, in accordance with the third embodiment of the invention, follows. This is represented using an alias rule, specifically to provide a short-cut addressing mechanism for subscribers in the *Stockley Park* office to address messages to colleagues in an office called *Murphy Ranch.* Rather than requiring a full international number an alias form is available locally (to Stockley Park subscribers only). This effectively disables access to any other possible address of the form 777nnnn.
Scope: c=UK, region=Greater London, city=Uxbridge, office=Stockley Park
Rule: 777,4,"c=US, state=CA, city=Milpitas, office=Murphy Ranch",
(objectClass="organizationalPerson")

To resolve an address of the form 777NNNN using this rule it is necessary to perform a sub-tree search within the scope specified by the rule for objects whose telephoneNumber attribute match the addressed digits using a right to left partial match. This yields a search of the form:
Search Scope: c=US, state=CA, city=Milpitas, office=Murphy Ranch
Filter: &(telephoneNumber="*NNNN")(objectClass="organizationalPerson")

Shortest unique addressing, in accordance with the second embodiment, can also be implemented by defining alias rules at the same scope as the addressing context with an empty prefix. This could be useful where the system administrator is not authorized to or does not wish to define a global rule at a higher scope within the directory organization. It may not be necessary to define global rules at a higher scope because only one system of this form will be deployed within the enterprise. Consider the example of User 1 defined above an alias rule to permit this user to address User 2 in San Jose can be defined as follows:
Scope: c=US, state=CA, city=San Jose, office=Murphy Ranch
Rule: NIL,7,"c=US, state=CO, city=San Jose",
(objectClass="organizationalPerson")

To resolve an address of the form NNNNNNN using this rule it is necessary to perform a subtree search within the scope specified by the rule for objects whose telephoneNumber attribute match the addressed digits using a right to left partial match. This yields a search of the form:
Search Scope: c=US, state=CA, city=San Jose
Filter: &(telephoneNumber="*NNNNNNN")(objectClass="organizationalPerson")

The effect of this form of rule is that User1, and others at the same location, can address any user of any system within the San Jose city using 7 digit addressing. Note: User2, also in San Jose, would not benefit from this rule definition unless it was defined at the scope of San Jose as a global rule.

To identify the ordered list of rules that can be used for addressing in the context of a Voice Mail subscriber, traverse the X.500 directory tree upwards from the particular Voice Mail subscriber object, appending any rules from objects of class numericAddressingRules encountered.

When choosing rules to apply to a given address, the list of rules will be traversed in order using the first matching rule. This means that it is possible to mask rules defined at a more global scope in order to simplify addressing from one location to another if the administrator chooses to do so.

All the embodiments described herein describe rules, added in conjunction with an enterprise directory, to allow a subscriber to use minimal addressing digits. These rules are evaluated based on the location of the addressing user ― their 'addressing context'. It would be further possible to support address validation based on artificially modifying an addressing context. This could be used to accommodate a user traveling from one location to another. Setting an addressing context to 'San Jose' would allow a subscriber to use San Jose addressing rules ― regardless of their actual location.

The invention thus provides various embodiments for offering improved addressing in a messaging system. The invention is not limited to any specific aspects of the described embodiments. The invention offers several advantages.

Message addressing within voice networks can be made simpler for subscribers to use, resulting in higher usage. This is possible without requiring significant local administration, as required in current systems. The existing enterprise directory, and existing directory data, may be used.

Voice message addressing, other than within a single voice mail system, where extension number is valid, is complex and limits adoption. Shortening the address number in accordance with the described embodiments of this invention may result in higher usage of voice messaging.

Various modifications to the described embodiments will be apparent to one skilled in the art. Features of the various embodiments may be combined and merged. The scope of protection afforded by the invention is defined by the appended claims.

## Claims

1. A method of addressing users in a messaging architecture comprising a plurality of voice messaging systems each associated with one or more users, the method comprising, at a selected messaging system: defining at least one user group; allocating users of the messaging architecture to a user group; and allocating an addressing rule to each user group, wherein a subscriber in the messaging architecture is addressed in dependence on the subscriber rule.

2. A method according to claim 1 wherein the step of defining at least one user group comprises allocating users to user groups in dependence on the user location.

3. A method according to claim 1 or claim 2 wherein the addressing rule is location specific.

4. A method according to any one of claims 1 to 3 wherein the step of addressing a user in the messaging architecture comprises retrieving a user group identifier for a user from stored data.

5. A method according to claim 4 wherein the retrieved user group identifier is used to retrieve a dialing rule from stored data.

6. A method according to claim 5 wherein the retrieved dialing rule is used to retrieve one or more fields of a user address from stored data.

7. A method according to claim 6 wherein the one or more fields are selectively retrieved in dependence on the group identifier.

8. A method according to claim 6 wherein the one or more fields are retrieved and selectively masked in dependence on the group identifier.

9. A method according to claim 1 wherein the dialing rule provides a rule for subscribers of any other messaging system for dialing the selected messaging system.

10. A method of addressing users in a messaging architecture comprising a plurality of voice messaging systems each associated with one or more users, the method comprising, at a selected messaging system: defining at least one user group; allocating all users of the messaging architecture to a user group; and allocating an addressing rule to each user group, wherein a user in the selected messaging system is addressed by any other user in accordance with the dialing rule allocated to the user group with which that other user belongs.

11. A method according to claim 1 wherein the dialing rule provides a rule for subscribers of the selected messaging system for dialing subscribers of other messaging systems.

12. A method of addressing users in a messaging architecture comprising a plurality of voice messaging systems each associated with one or more users, the method comprising, at a selected messaging system: defining at least one user group; allocating at least the users of the messaging architecture external to the selected messaging system to a user group; and allocating an addressing rule to each user group, wherein a user in the selected messaging system addresses any other user in accordance with the dialing rule allocated to the user group with which that other user belongs..

13. A method according to claim 1 wherein the dialing rule provides a rule for subscribers of any other messaging system for dialing the selected messaging system.

14. A method of addressing users in a messaging architecture comprising a plurality of voice messaging systems each associated with one or more users, the method comprising, at a selected messaging system: defining at least one user group; allocating at least the users of the messaging architecture external to the selected messaging system to a user group; and allocating an addressing rule to each user group, wherein a used in the selected messaging system addresses users in another selected messaging system in accordance with the dialing rule allocated to the user group with which that user belongs.
